# EUROPÄISCHE PATENTANMELDUNG

(11) **EP 2 221 609 A2**
(43) Veröffentlichungstag der Anmeldung: **25.08.2010**
(21) Anmeldenummer: 10001174.1
(22) Anmeldetag: 05.02.2010
(51) Int. Cl.: G01N 21/88

(54) **Verfahren und Vorrichtung zum optischen Inspizieren einer Oberfläche an einem Gegenstand**

(30) Priorität: 19.02.2009 DE 102009010988
(71) Anmelder: Carl Zeiss OIM GmbH, 73117 Wangen (DE)
(72) Erfinder: Knupfer, Klaus-Georg, 73457 Essingen (DE)
(74) Vertreter: Carl Zeiss AG - Patentabteilung

(57) **Zusammenfassung**

Zum optischen Inspizieren einer Oberfläche (32) an einem Gegenstand (26) wird ein erstes Muster mit einer Vielzahl von helleren und dunkleren Bereichen bereitgestellt, die einen ersten Intensitätsverlauf mit einer ersten Periode bilden. Der Gegenstand (26) wird mit der Oberfläche (32) relativ zu dem Muster positioniert. Dies geschieht auf eine Weise, so dass der erste Intensitätsverlauf auf die Oberfläche (32) fällt. Anschließend wird der erste Intensitätsverlauf relativ zu der Oberfläche (32) um eine definierte Schiebedistanz (126) verschoben. Entlang dieser Schiebedistanz (126) kann die Oberfläche (32) eine Vielzahl von unterschiedlichen Positionen relativ zu dem ersten Intensitätsverlauf einnehmen. Es werden zudem eine Vielzahl von Bildern aufgenommen, die die Oberfläche (32) mit dem ersten Intensitätsverlauf an den jeweils unterschiedlichen Positionen zeigen. Anhand dieser Bilder werden Eigenschaften der Oberfläche (32) bestimmt. Gemäß einem Aspekt der Erfindung weist das erste Muster eine Rotationssymmetrie relativ zu einem definierten Ursprungspunkt auf.

## Beschreibung

Die vorliegende Erfindung betrifft ein Verfahren zum optischen Inspizieren einer Oberfläche an einem Gegenstand, mit den Schritten:
- Bereitstellen eines ersten Musters mit einer Vielzahl von helleren und dunkleren Bereichen, die einen ersten Intensitätsverlauf mit einer ersten Periode bilden,
- Positionieren des Gegenstandes mit der Oberfläche relativ zu dem Muster derart, dass der erste Intensitätsverlauf auf die Oberfläche fällt,
- Verschieben des ersten Intensitätsverlaufs relativ zu der Oberfläche um eine definierte Schiebedistanz, wobei die Oberfläche entlang der Schiebedistanz eine Vielzahl von unterschiedlichen Positionen relativ zu dem ersten Intensitätsverlauf einnimmt,
- Aufnehmen einer Vielzahl von Bildern, die die Oberfläche mit dem ersten Intensitätsverlauf an den unterschiedlichen Positionen zeigen, und
- Bestimmen von Eigenschaften der Oberfläche in Abhängigkeit von den Bildern.

Die Erfindung betrifft ferner eine Vorrichtung zum optischen Inspizieren einer Oberfläche an einem Gegenstand, mit einem ersten Muster mit einer Vielzahl von helleren und dunkleren Bereichen, die einen ersten Intensitätsverlauf mit einer ersten Periode bilden, einer Aufnahme zum Positionieren des Gegenstandes mit der Oberfläche relativ zu dem Muster derart, dass der erste Intensitätsverlauf auf die Oberfläche fällt, einer Steuereinheit zum Verschieben des ersten Intensitätsverlaufs relativ zu der Oberfläche um eine definierte Schiebedistanz, wobei die Oberfläche entlang der Schiebedistanz eine Vielzahl von unterschiedlichen Positionen relativ zu dem ersten Intensitätsverlauf einnimmt, zumindest einer Bildaufnahmeeinheit zum Aufnehmen einer Vielzahl von Bildern, die die Oberfläche mit dem ersten Intensitätsverlauf an den unterschiedlichen Positionen zeigen, und einer Auswerteeinheit zum Bestimmen von Eigenschaften der Oberfläche in Abhängigkeit von den Bildern.

Ein solches Verfahren und eine solche Vorrichtung sind beispielsweise aus WO 2009/007130 A1 bekannt.

Bei der industriellen Fertigung von Produkten spielt die Produktqualität eine immer wichtigere Rolle. Hohe Qualität kann einerseits durch entsprechend ausgelegte, stabile Fertigungsprozesse erreicht werden. Andererseits müssen die Qualitätsparameter eines Produktes möglichst zuverlässig und vollständig kontrolliert werden, um Qualitätsmängel frühzeitig zu erkennen. In vielen Fällen spielt die Qualität einer Oberfläche eine wichtige Rolle für die Produkteigenschaften. Dabei kann es sich um dekorative Oberflächen handeln, wie etwa Lackoberflächen bei Kraftfahrzeugen, oder um technische Oberflächen, wie beispielsweise die Oberfläche von feinbearbeiteten metallischen Kolben oder Lagern.

Es gibt bereits eine Vielzahl von Vorschlägen und Konzepten, um solche Oberflächen automatisiert zu inspizieren. Die eingangs genannte WO 2009/007130 A1 beschreibt ein Verfahren und eine Vorrichtung, welche ein kombiniertes Muster verwenden, das auf die zu inspizierende Oberfläche fällt. Das kombinierte Muster besteht aus zumindest zwei verschiedenen Streifenmustern mit jeweils parallelen, länglichen Streifen, die gemeinsam auf die Oberfläche fallen, wobei jedes Streifenmuster einen Intensitätsverlauf mit einer Periode bildet. Die Intensitätsverläufe der Streifenmuster sind quer zueinander angeordnet. Die zu untersuchende Oberfläche wird relativ zu den Intensitätsverläufen verschoben und es werden Bilder der Oberfläche mit den relativ verschobenen Intensitätsverläufen aufgenommen. Anhand der Bilder können Oberflächeneigenschaften automatisiert bestimmt werden.

Das bekannte Verfahren und die bekannte Vorrichtung beruhen auf der sogenannten Deflektomtrie und versprechen eine recht schnelle und gut reproduzierbare Qualitätsprüfung an zumindest teilweise reflektierenden Oberflächen. In der Regel liegt die zu prüfende Oberfläche bei diesem und bei anderen bekannten Verfahren an einer frei zugänglichen Außenseite des Gegenstandes. Es gibt jedoch viele Fälle, in denen der zu untersuchende Gegenstand innenliegende Hohlräume besitzt, wie etwa zylindrische Bohrungen. Häufig besitzen solche Hohlräume kleine Durchmesser und die innenliegenden Mantelflächen sind stark gekrümmt. Mit den bekannten Verfahren und Vorrichtungen lassen sich solche Mantelflächen nur schlecht inspizieren. Je stärker die Krümmung und je kleiner der Hohlraum ist, desto aufwendiger und schwieriger ist die Inspektion der Oberfläche. Gleiches gilt grundsätzlich auch für stark gekrümmte Außenseiten eines Gegenstandes, wenngleich die zu inspizierende Oberfläche in diesen Fällen relativ gut von außen zugänglich ist.

Vor diesem Hintergrund ist es eine Aufgabe der vorliegenden Erfindung, ein alternatives Verfahren und eine Vorrichtung anzugeben, um eine vergleichsweise stark gekrümmte Oberfläche, insbesondere die innenliegende Mantelfläche einer Bohrung o.ä., weitgehend automatisiert, schnell und zuverlässig zu inspizieren. Vorzugsweise sollen das Verfahren und die Vorrichtung universell einsetzbar sein und sich auch für große und weniger stark gekrümmte Oberflächen eignen.

Diese Aufgabe wird nach einem Aspekt der Erfindung durch ein Verfahren und eine Vorrichtung der eingangs genannten Art gelöst, wobei das erste Muster eine Rotationssymmetrie relativ zu einem definierten Ursprungspunkt aufweist.

Das neue Verfahren und die neue Vorrichtung verwenden ein Muster, das einen weitgehend punktförmigen Ursprung besitzt, von dem aus sich das Muster radial in mehrere Richtungen erstreckt. In einigen bevorzugten Ausgestaltungen bildet der punktförmige Ursprung (Ursprungspunkt) ein Zentrum des Musters, um das herum das Muster ausgebildet ist. In bevorzugten Ausgestaltungen erstreckt sich das Muster über 360° um den Ursprungspunkt herum. In anderen Ausgestaltungen kann das Muster einen Sektor mit einem Winkelmaß von weniger als 360° bedecken, beispielsweise einen Kreissektor mit einem Winkelmaß von 90° oder 180°. Aber auch in diesen Fällen erstreckt sich das Muster von dem Ursprungspunkt radial nach außen.

Darüber hinaus besitzt das Muster eine Rotationssymmetrie relativ zu dem Ursprungspunkt. Dies bedeutet, dass das Muster mit einer Drehung um den Ursprungspunkt von weniger als 360° auf sich selbst abgebildet werden kann. Dies gilt insbesondere für eine Drehung, deren Drehwinkel der ersten Periode entspricht.

Durch die Rotationssymmetrie eignet sich das neue Muster besonders gut für eine Projektion auf stark gekrümmte Oberflächen. Insbesondere bei halbsphärenförmigen und zylinderförmigen Oberflächen, die in der Praxis häufig auftreten, lässt sich eine gleichmäßige Verteilung der helleren und dunkleren Bereiche auf der Oberfläche erreichen. Durch die gleichmäßige Verteilung können die Eigenschaften der Oberfläche auf einfache und gut reproduzierbare Weise bestimmt werden. Überraschenderweise hat sich gezeigt, dass Algorithmen von bekannten Verfahren, wie etwa dem aus der eingangs genannten WO 2009/007130 A1 praktisch ohne Änderung auf die neuen Muster übertragen werden können. Infolge dessen ist die Inspektion von gekrümmten Oberflächen sehr einfach und mit geringen Kosten möglich.

Die oben genannte Aufgabe ist daher vollständig gelöst.

Vorzugsweise wird das Muster derart zu der gekrümmten Oberfläche angeordnet, dass es auf die gesamte zu inspizierende Oberfläche fällt. Dies ist vor allem bei zylindrischen Bohrungen möglich. Diese Ausgestaltung macht es möglich, die gesamte Oberfläche mit wenigen Messschritten zu erfassen.

In einer bevorzugten Ausgestaltung der Erfindung wird ein zweites Muster mit einer Vielzahl von helleren und dunkleren Bereichen bereitgestellt, die einen zweiten Intensitätsverlauf mit einer zweiten Periode bilden, wobei das erste und das zweite Muster zu einem Gesamtmuster kombiniert sind.

In dieser Ausgestaltung wird ein Kombinationsmuster verwendet, das aus zumindest zwei Teilmustern besteht, die sich vorzugsweise einander überlagern. Es ist aber auch denkbar, dass das Muster abschnittsweise aus dem ersten und dem zweiten Teilmuster gebildet ist, so dass sich die Muster nicht direkt überlagern, sondern nebeneinander liegen. Jedes der Teilmuster bildet einen eigenen Intensitätsverlauf mit eigener Periode und Verlaufsrichtung. Vorzugsweise verlaufen die Intensitätsverläufe des ersten und des zweiten Teilmusters quer zueinander, weil dies eine schnelle Inspektion der Oberfläche in orthogonalen Richtungen ermöglicht. Vorteilhafterweise erstrecken sich durch jeden Punkt des Kombinationsmusters mehrere verschiedene Intensitätsverläufe in unterschiedlichen Richtungen. Jeder der Intensitätsverläufe kann eine individuelle, von den anderen Intensitätsverläufen verschiedene Periodenlänge besitzen, was von Vorteil ist, um den Glanzgrad der Oberfläche sehr schnell zu bestimmen. Bei einer Überlagerung der verschiedenen Teilmuster kann dies bevorzugt additiv oder multiplikativ erfolgen, wodurch eine spätere Rekonstruktion der einzelnen Teilmuster erheblich vereinfacht wird.

In einer weiteren Ausgestaltung stehen der erste und der zweite Intensitätsverlauf senkrecht zueinander.

Mit dieser Ausgestaltung kann die Oberfläche in zwei Dimensionen mit jeweils optimalen Intensitätsverläufen inspiziert werden. Außerdem wird eine unabhängige Inspektion in jeweils einer Dimensionen ermöglicht, dass indem das Gesamtmuster senkrecht zu einem der beiden Intensitätsverläufe in Bezug auf die Oberfläche bewegt wird.

In einer weiteren Ausgestaltung der Erfindung verläuft der Intensitätsverlauf vom Ursprungspunkt radial nach außen.

In dieser Ausgestaltung besitzt das Muster helle und dunkle Bereiche, die sich auf einem Pfad, der im Ursprungspunkt beginnt, abwechseln. Mit dieser Ausgestaltung kann das Muster sehr einfach in Polarkoordinaten beschrieben werden und daher sehr schnell und mit geringem Aufwand erzeugt werden.

In einer weiteren Ausgestaltung verläuft der Intensitätsverlauf um den Ursprungspunkt herum.

In dieser Ausgestaltung schneidet der Intensitätsverlauf den Ursprungspunkt nicht. Vorzugsweise erstreckt sich der Intensitätsverlauf auf einer elliptischen, insbesondere kreisförmigen Bahn um den Ursprungspunkt. Es sind aber auch vieleckige oder andere, vorzugsweise geschlossene kurvenförmige Bahnen denkbar, die um den Ursprungspunkt herum angeordnet sind. Auch diese Ausgestaltung ermöglicht die Beschreibung des Musters in Polarkoordinaten und somit eine einfache und schnelle Erzeugung des Musters. Bei Oberflächen mit einer kreisförmigen Grundstruktur, wie beispielsweise einer Halbsphäre oder einem Kreiszylinder, fällt der Ursprungspunkt vorzugsweise mit einem Symmetriepunkt der Oberfläche zusammen, was eine sehr schnelle vollständige Inspektion der Oberfläche ermöglicht.

In einer weiteren Ausgestaltung weist das Muster helle und dunkle Strahlen auf, die vom Ursprungspunkt radial nach außen verlaufen.

In dieser Ausgestaltung ist das Muster mit Sonnenstrahlen vergleichbar, d.h. es erstreckt sich sonnenstrahlenartig von dem Ursprungspunkt radial nach außen, wobei die Sonne dem Ursprungspunkt entspricht. Die Ausgestaltung ermöglicht eine sehr einfache Realisierung eines gleichmäßig umlaufenden Intensitätsverlaufs. Die regelmäßige Struktur ermöglicht eine vollflächige Inspektion der Oberfläche mit geringem a priori Wissen.

In einer weiteren Ausgestaltung der Erfindung weist das Muster helle und dunkle Ringe auf, die den Ursprungspunkt umgeben. Vorzugsweise umgeben die Ringe den Ursprungspunkt weitgehend konzentrisch.

Diese Ausgestaltung ermöglicht eine sehr einfache und schnelle Realisierung eines Musters mit einem radial verlaufenden Intensitätsverlauf.

Bevorzugt wird eine Kombination der radial verlaufenden Strahlen und der konzentrisch verlaufenden Ringe verwendet. Die Kombination dieser Teilmuster zu einem Gesamtmuster ergibt eine gitternetzartige Struktur, wie sie beispielsweise bei einem Koordinatensystem mit Polarkoordinaten vorliegt. Diese Struktur ist vergleichbar,mit der Struktur eines Spinnennetzes. Diese Kombination bietet den Vorteil, dass die inspizierte Oberfläche sehr einfach und schnell in zwei Dimensionen inspiziert werden kann.

In einer weiteren bevorzugten Ausgestaltung weist das Muster spiralartig gekrümmte Streifen auf, die vom Ursprungspunkt radial nach außen verlaufen.

Besonders bevorzugt ist ein Gesamtmuster, das ein erstes Teilmuster mit spiralartig gekrümmten ersten Streifen und ein zweites Teilmuster mit spiralartig gekrümmten zweiten Streifen aufweist. Die spiralartig gekrümmten ersten und zweiten Streifen haben bevorzugt eine gegenläufige Krümmung. In einigen Varianten können die spiralartig gekrümmten ersten und zweiten Streifen unterschiedliche Steigungen besitzen.

Ein solches Muster kann sehr einfach und kostengünstig auf einer Scheibe verwendet werden, die in eine mechanische Drehung versetzt wird, um die Relativbewegung zwischen Muster und zu inspizierender Oberfläche zu erzeugen. Die spiralartigen Streifen erzeugen beim Drehen eine Relativverschiebung in zwei Dimensionen, was für eine umfassende Oberflächeninspektion von Vorteil ist.

In einer weiteren bevorzugten Ausgestaltung weist der Intensitätsverlauf einen weitgehend kontinuierlichen Übergang zwischen einem helleren und einem dunkleren Bereich auf.

In dieser Ausgestaltung besitzt der Intensitätsverlauf eine Periode mit zumindest weitgehend kontinuierlichen Hell-Dunkel-Übergängen. Auf diese Weise kann jeder Punkt des Intensitätsverlaufs anhand seiner lokalen Intensität und der Intensitätsänderung gegenüber einem benachbarten Punkt eindeutig identifiziert werden. Dies erleichtert die Auswertung, da jeder Punkt des Intensitätsverlaufs innerhalb der Periode eine eindeutige Phasenlage besitzt. Vorzugsweise wird als kontinuierlicher Übergang ein Sinusverlauf verwendet. Weiter sind auch andere weitgehend kontinuierliche Verläufe denkbar, wie beispielsweise ein Sägezahn- oder Dreiecksverlauf.

Allgemein werden hier unter kontinuierlichen Übergängen auch jene Übergänge verstanden, die allein aufgrund ihrer technischen Umsetzung diskrete Stufen haben, jedoch einen kontinuierlichen Verlauf wie beispielsweise einen Sinusverlauf im Wesentlichen wiedergeben. Beispielsweise fällt darunter eine Anordnung von Leuchtdioden, die in Richtung des Intensitätsverlaufs unterschiedliche Helligkeiten besitzen, welche entsprechend ihres Abstands zueinander punktweise den kontinuierlichen Intensitätsverlauf bilden.

In einer weiteren Ausgestaltung der Erfindung ist das Muster aus einer Vielzahl von hellen und dunklen Punkten gebildet, wobei verschiedene Punktedichten den Intensitätsverlauf bilden.

In dieser Ausgestaltung wird eine gewünschte Intensität an einer bestimmten Stelle des Musters dadurch definiert, in welchem Verhältnis helle und dunkle Punkte in einem bestimmten Bereich um den Intensitätspunkt herum vorliegen. Dies bedeutet, je mehr dunkle (oder helle) Punkte innerhalb eines Bereichs vorliegen, desto dunkler (heller) ist die Intensität der Stelle. Dies gilt unabhängig davon, welche Intensität der Punkt an dieser Stelle selbst besitzt. Diese Ausgestaltung ist insbesondere bei einer binären (zweifarbigen, etwa schwarzweißen) Darstellung sehr einfach realisierbar. Dies kann beispielsweise durch ein schwarzweißes Bild oder eine Anordnung von leuchtenden und nichtleuchtenden Leuchtdioden herbeigeführt werden.

In einer weiteren Ausgestaltung beinhaltet das Muster den Ursprungspunkt.

In dieser Ausgestaltung wird das Muster nicht nur durch den Ursprungspunkt definiert, sondern es beinhaltet auch den Ursprungspunkt. Dies ermöglicht auf sehr einfache Weise, ein rotationssymmetrisches Muster mit feinen Musterstrukturen zu erzeugen. Außerdem kann der Ursprungspunkt sehr vorteilhaft zum Ausrichten des Musters verwendet werden.

In einer anderen Ausgestaltung ist ein Bereich mit dem Ursprungspunkt musterfrei.

In dieser Ausgestaltung ist der Ursprungspunkt nicht Teil des Muster. Trotzdem definiert er den Drehpunkt für die Rotationssymmetrie. Diese Ausgestaltung ist von Vorteil, um beispielsweise eine Kamera zum Aufnehmen der Bilder im Zentrum des Musters selbst anzuordnen. Außerdem kann man mit dieser Ausgestaltung vermeiden, dass Musterstrukturen, die für eine Darstellung und/oder Auswertung zu fein sind, störende Reflexionen auf der zu inspizierenden Oberfläche erzeugen.

In einer weiteren Ausbildung der Erfindung besitzt der Intensitätsverlauf mehrere Frequenzen.

In einer Variante dieser Ausgestaltung kann sich die Frequenz in Richtung des Intensitätsverlaufs verändern. In dieser Ausgestaltung ändert sich also die Periodenlänge der Periode in Richtung des Intensitätsverlaufs und somit auch deren Kehrwert, also die Frequenz. Die Frequenz kann in Richtung des Intensitätsverlaufs beispielsweisegrößer werden, wodurch sich die Periodenlänge verringert, oder kleiner werden, wodurch sich die Periodenlänge vergrößert. Beispielsweise würde sich im Falle eines radialen Intensitätsverlaufs, dessen Frequenz mit steigendem Abstand vom Ursprungspunkt sinkt, ein Muster ergeben, welches mehrere konzentrisch zum Ursprungspunkt angeordnete Kreise aufweist. Diese Kreise wären in der Nähe des Ursprungspunkts mit geringen Abständen zueinander angeordnet und würden einen entsprechend schmalen Ring bilden. Mit zunehmender Entfernung vom Ursprungspunkt vergrößert sich die Breite der Ringe sowie die Abstände zwischen den Ringen. Dementsprechend wird die Periodenlänge größer, die Frequenz wird mit zunehmendem Abstand vom Ursprungspunkt kleiner. In einer anderen Variante können die mehreren Frequenzen den Intensitätsverlauf nach Art einer Fouriersynthese bilden. Die Ausgestaltung besitzt insgesamt den Vorteil, dass verschiedene Periodenlängen/Frequenzen (oder anschaulich gesprochen: Streifenbreiten) in einem Muster enthalten sind und so die Oberfläche sehr schnell mit verschiedenen Periodenlängen inspiziert werden kann. Dies kann vorteilhaft genutzt werden, um den Glanzgrad der Oberfläche zu bestimmen. Des weiteren können die verschiedenen Periodenlängen sehr vorteilhaft verwendet werden, um eine optimale Streifenbreite zu einem bestimmten Krümmungsradius der Oberfläche zur Verfügung zu stellen.

In einer weiteren Ausgestaltung der Erfindung besitzt die Periode eine Frequenz, die sich quer zur Richtung des Intensitätsverlaufs verändert.

Dies ist beispielsweise bei einem sonnenstrahlenartigen Muster mit einem kreisförmigen Intensitätsverlauf der Fall, da die Bogenlänge der Kreisbahn mit zunehmendem Radius größer wird. Mit dieser Ausgestaltung lässt sich die perspektivische Verjüngung eines zylinderförmigen Rohrs ausgleichen, um so ein gleichmäßiges Muster über der gesamten inneren Mantelfläche des Rohrs zu erhalten. Daher trägt diese Ausgestaltung dazu bei, die Inspektion von tiefen rohrförmigen Hohlkörpern zu vereinfachen.

In einer weiteren Ausgestaltung wird das Muster um den Ursprungspunkt gedreht, um den Intensitätsverlauf relativ zu der Oberfläche zu verschieben.

Diese Ausgestaltung ermöglicht eine sehr einfache und schnelle räumliche Bewegung des Musters relativ zu der Oberfläche, die sich insbesondere für eine deflektometrische Auswertung eignet, wie sie etwa in der eingangs genannten WO 2009/007130 A1 beschrieben ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine vereinfachte Darstellung eines Ausführungsbeispiels der neuen Vorrichtung, die zum Inspizieren einer innenliegenden Mantelfläche eines Hohlkörpers ausgebildet ist,
- Fig. 2: ein Muster mit einem um einen Ursprungspunkt herum verlaufenden Intensitätsverlauf,
- Fig. 3: das Muster aus Fig. 2 in einer binären Darstellung bestehend aus vielen hellen und dunklen Punkten,
- Fig. 4: ein weiteres Muster mit einem radial zu dem Ursprungspunkt verlaufenden Intensitätsverlauf,
- Fig. 5: das Muster aus Fig. 4 in einer binären Darstellung bestehend aus hellen und dunklen Punkten,
- Fig. 6: ein weiteres Muster mit spiralartigen Streifen und einem spiralförmig zum Ursprungspunkt verlaufenden Intensitätsverlauf,
- Fig. 7: das Muster aus Fig. 6 in einer binären Darstellung bestehend aus hellen und dunklen Punkten,
- Fig. 8: ein Kombinationsmuster bestehend aus dem Muster aus Fig. 2 und dem weiteren Muster aus Fig. 4,
- Fig. 9: das Kombinationsmuster aus Fig. 8 in einer binären Darstellung bestehend aus hellen und dunklen Punkten,
- Fig. 10: ein weiteres Kombinationsmuster bestehend aus ersten und zweiten spiralartigen Streifen,
- Fig. 11: das weitere Kombinationsmuster aus Fig. 10 in einer binären Darstellung,
- Fig. 12: die Vorrichtung aus Fig. 1 in einer vereinfachten Darstellung mit einem optischen Verlauf,
- Fig. 13: eine Draufsicht auf einen Gegenstand mit einem zylinderförmigen Innenmantel in einer ersten Position des Musters aus Fig. 4,
- Fig. 14: den Gegenstand aus Fig. 13 mit einer zweiten Position des Musters aus Fig. 4,
- Fig. 15: den Gegenstand aus Fig. 13 in einer dritten Position des Musters aus Fig. 4, und
- Fig. 16: ein Flussdiagramm zur Erläuterung von Ausführungsbeispielen des Verfahrens.

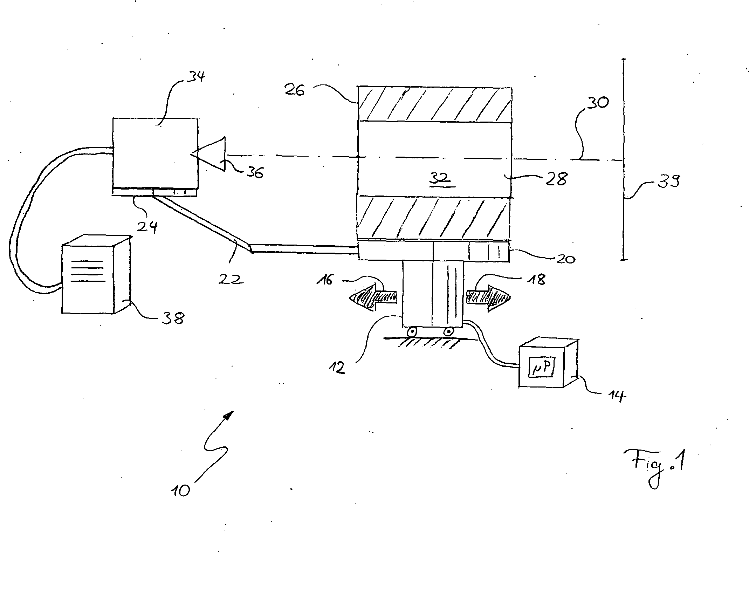

In Fig. 1 ist ein Ausführungsbeispiel der neuen Vorrichtung in seiner Gesamtheit mit der Bezugsziffer 10 bezeichnet.

Die Vorrichtung 10 besitzt eine Aufnahme 12, welche mit einer Steuereinheit 14 gekoppelt ist. Die Steuereinheit 14 ermöglicht, die Aufnahme 12 in Richtung der Pfeile 16 oder 18 zu bewegen. Die Aufnahme 12 besitzt einen ersten Aufnahmetisch 20, an welchem ein Haltearm 22 angeordnet ist. Dieser hält einen zweiten Aufnahmetisch 24. Auf dem Aufnahmetisch 20 ist ein Gegenstand 26 angeordnet, welcher einen zylindrischen Durchbruch in Form einer Bohrung 28 besitzt. Die Bohrung 28 weist eine Längsachse 30 auf. In Umfangsrichtung um die Längsachse 30 besitzt die Bohrung 28 einen Innenmantel 32. Dieser Innenmantel 32 ist eine zu inspizierende Oberfläche. Auf dem zweiten Aufnahmetisch 24 ist eine Bildaufnahmeeinheit 34 angeordnet, welche eine Optik 36 besitzt. Die Optik 36 liegt in der Längsachse 30, so dass ermöglicht wird, mit der Bildaufnahmeeinheit 34 durch die Bohrung 28 hindurch zu schauen und den gesamten Innenmantel 32 zu erfassen. An die Bildaufnahmeeinheit 34 ist eine Auswerteeinheit 38 angeschlossen, welche von der Bildaufnahmeeinheit 34 erstellte Bilder speichert und auswertet. Dabei ist es Aufgabe der Auswerteeinheit 38, anhand der aufgenommenen Bilder Eigenschaften des Innenmantels 32 zu bestimmen. Diese Eigenschaften können Fehler oder Defekte wie beispielsweise Riefen, Lunker, Poren oder Verschmutzungen sein. Vorteilhaft erfolgt die Auswertung nach dem Prinzip der Deflektometrie, indem von der Bildaufnahmeeinheit 34 über den Innenmantel 32 ein Mustergenerator 39 betrachtet wird. Der Mustergenerator 39 ist gegenüber der Aufnahme 12 fest angeordnet. Er erzeugt ein Muster, welches dazu geeignet ist, die Eigenschaften des Innenmantels 32 schnell, einfach und in wenigen Arbeitsschritten zu erfassen. Der Mustergenerator 39 kann dieses Muster entweder selbst variabel erzeugen oder fest aufweisen. Beispielsweise ist eine Anordnung von Leuchtdioden denkbar, die bereichsweise leuchten oder nicht leuchten und dadurch das Muster erzeugen. Alternativ kann der Mustergenerator 39 ein fest angeordnetes Muster aufweisen, das beispielsweise aufgedruckt ist.

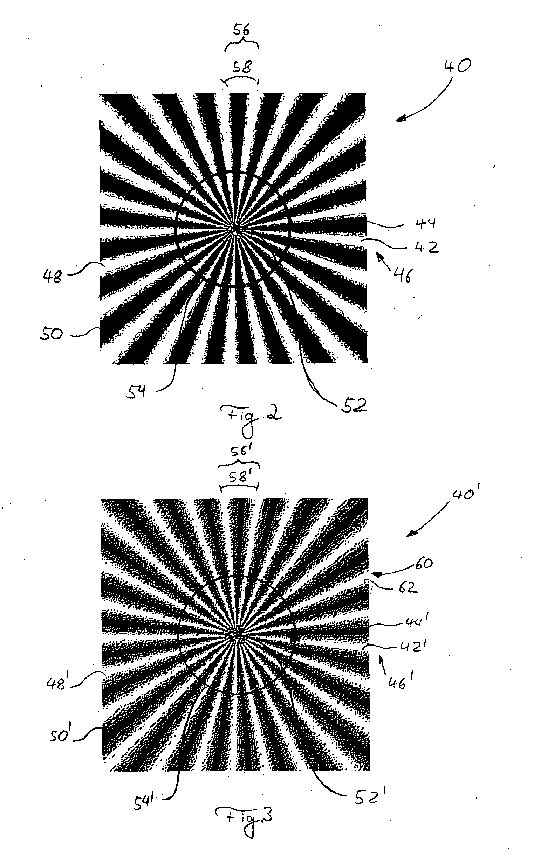

Fig. 2 zeigt ein erstes Muster 40, welches für die Verwendung mit dem Mustergenerator 39 geeignet ist. Das Muster 40 besteht aus wechselweise, winkelversetzt zueinander angeordneten helleren Strahlen 42 und dunkleren Strahlen 44. Der Übergang 46 von den helleren Stahlen 42 zu den dunkleren Strahlen 44 erfolgt kontinuierlich in Form eines Sinusverlaufs. Der Sinusverlauf ist in Fig. 2 in einer Draufsicht dargestellt. Aufgrund der Anordnung der Strahlen 42 und 44 ergeben sich hellere Bereiche 48 und dunklere Bereiche 50, welche in Umfangsrichtung wechselweise aufeinanderfolgend angeordnet sind. Die Strahlen 42 und 44 treffen in einem Ursprungspunkt 52 zusammen, welcher mittig innerhalb des Musters 40 angeordnet ist. Ein Intensitätsverlauf 54 des Musters 40 ergibt sich senkrecht zu den Strahlen 42, 44. Somit bildet das Muster 40 kreisförmige Intensitätsverläufe aus, die konzentrisch zum Ursprungspunkt 52 liegen. Ein Intensitätsverlauf 54 ist exemplarisch mittels eines Kreises gezeigt. Entlang des Intensitätsverlaufs 54 ergibt sich der Sinusverlauf mit einer Periode 56. Diese entspricht beispielsweise dem Abschnitt des Intensitätsverlaufs 54 von einem hellsten Punkt zu dem nächsten hellsten Punkt, oder von einem dunkelsten Punkt zu einem in Richtung des Intensitätsverlaufs 54 folgenden dunkelsten Punkt. Die Periode 56 besitzt eine Frequenz 58, welche hier mittels der Periodenlänge verdeutlicht ist. Die Frequenz 58 ist in Richtung des Intensitätsverlaufs 54 gleichbleibend, wohingegen sie sich in radialer Richtung zum Ursprungspunkt 52 verändert. Die Veränderung erfolgt derart, dass in der Nähe des Ursprungspunkts 52 eine hohe Frequenz 58 vorliegt, wohingegen in radialer Entfernung vom Ursprungspunkt 52 eine niedrigere Frequenz 58 vorliegt.

Die Fig. 3 zeigt das Muster 40 in einer binären, schwarzweißen Variante als Muster 40'. Dies bedeutet, dass jeder Punkt des Musters nur einen schwarzen oder einen weißen Zustand annehmen kann. Die gewünschten kontinuierlichen Verläufe werden mittels Punktedichten 60 angenähert. Die Punktedichten 60 bestehen jeweils aus mehreren Punkten 62. Wird das Muster 40' im Gesamten betrachtet, so besitzt jede Stelle nicht nur einen schwarzen oder weißen Wert, sondern einen Zwischenwert. Dieser Zwischenwert ergibt sich aus dem Verhältnis zwischen schwarzen und weißen um die Stelle angeordneten Punkten 62.

Wie man anhand der Fig. 2 und 3 leicht nachvollziehen kann, besitzen die Muster 40, 40' eine Rotationssymmetrie in Bezug auf den Ursprungspunkt 52, 52'. Wenn man das Muster 40, 40' um eine Periodenlänge 58 um den Ursprungspunkt 52, 52' dreht, erhält man das identische Muster 40, 40' wieder. Mit anderen Worten lässt sich das Muster 40, 40' durch Drehung um den Ursprungspunkt 52, 52' auf sich selbst abbilden.

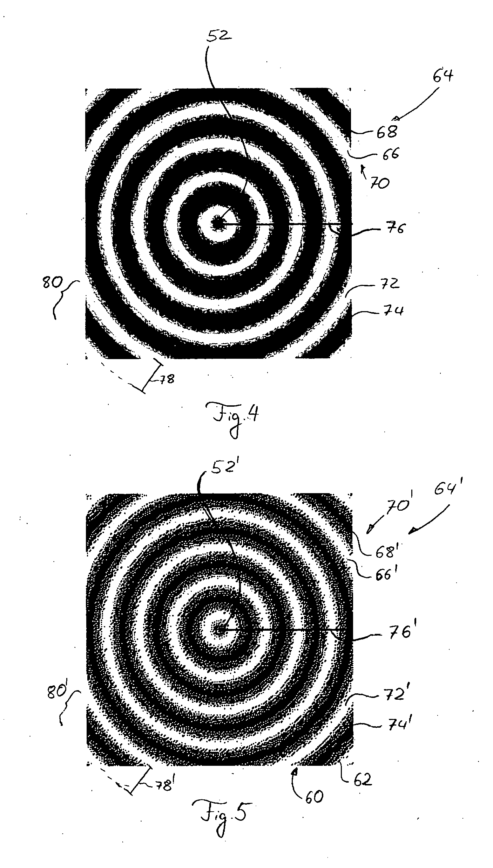

Fig. 4 zeigt ein zweites Muster 64, bestehend aus helleren streifenförmigen Ringen 66 und dunkleren streifenförmigen Ringen 68, die konzentrisch um den Ursprungspunkt 52 angeordnet sind und sich in radialer Richtung vom Ursprungspunkt 52 aus betrachtet abwechseln. Zwischen den Ringen 66 und 68 ergeben sich kontinuierliche Übergänge 70 in radialer Richtung. Auf diese Weise bilden die helleren Ringe 66 und dunkleren Ringe 68 hellere Bereiche 72 und dunklere Bereiche 74. Der Intensitätsverlauf 76 des zweiten Musters 64 erstreckt sich in radialer Richtung, ausgehend vom Ursprungspunkt 52. Entlang dieses Intensitätsverlaufs 76 entsteht ein Sinusverlauf für die Intensität. Dieser Sinusverlauf und damit der Intensitätsverlauf 76 besitzt eine Periode 78, welche sich hier exemplarisch von einer hellsten Stelle zur nächsten hellsten Stelle des nächsten Rings 66 erstreckt. Die Periode 78 besitzt eine Frequenz 80, welche wieder mittels der Periodenlänge verdeutlicht wird. Die Frequenz 80 ist in radialer Richtung sowie in umfänglicher Richtung des Intensitätsverlaufs 76 gleichbleibend.

Fig. 5 zeigt eine binäre, schwarzweiße Variante des Musters 64 der Fig. 4 in Form des Musters 64'. Das Muster 64' erzeugt seinen Intensitätsverlauf 76' mittels der Punktedichten 60, welche aus den einzelnen schwarzen oder weißen Punkten 62 bestehen. Die Eigenschaften bezüglich der Intensität an jeder Stelle des Musters 64' ergeben sich analog zu dem Muster 40' der Fig. 3.

Auch das Muster 64, 64' besitzt die bereits erwähnte Rotationssymmetrie in Bezug auf den Ursprungspunkt 52, 52'. In diesem Fall führt sogar jede beliebige Drehung um den Ursprungspunkt 52, 52' zu einer identischen Abbildung des Musters 64, 64' auf sich selbst.

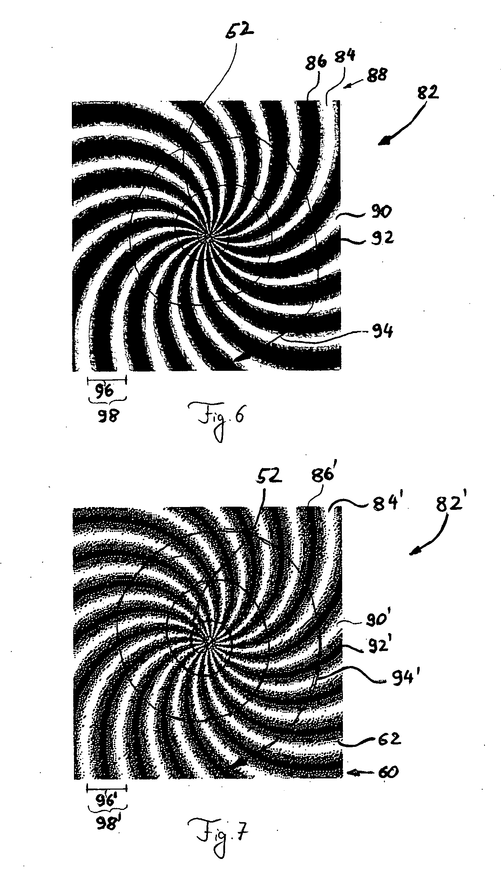

Fig. 6 zeigt ein drittes Muster 82, das hellere Strahlen 84 und dunklere Strahlen 86 besitzt. Die Strahlen 84 und 86 sind winkelversetzt zueinander um den Ursprungspunkt 52 herum angeordnet, wobei die Strahlen 84 und 86 jeweils einen gleichförmig gekrümmten, spiralartigen Verlauf aufweisen. Ein Übergang 88 zwischen den helleren und dunkleren Strahlen 84 und 86 ist kontinuierlich. Auf diese Weise bilden die helleren Strahlen 84 und die dunkleren Strahlen 86 hellere Bereiche 90 und dunklere Bereiche 92. Das Muster 82 besitzt einen Intensitätsverlauf 94, welcher spiralförmig von dem Ursprungspunkt 52 im Uhrzeigersinn verläuft. Entlang dieses Intensitätsverlaufs 94 sind die Übergänge 88 zwischen den Strahlen 84 und 86 sinusförmig und besitzen eine Periode 96. Die Periode 96 weist eine Frequenz 98 auf, die anhand der Periodenlänge dargestellt ist.

Fig. 7 zeigt eine binäre, schwarzweiße Variante des Musters 82 als Muster 82'. Wie die Muster 40' der Fig. 3 und 64' der Fig. 5 besteht dieses Muster 82' aus Punktedichten 60, welche Punkte 62 aufweisen. Die Eigenschaften des Musters 82' aufgrund seiner schwarzweißen Ausführung ergeben sich analog zu den Eigenschaften des Musters 40' der Fig. 3.

Auch das Muster 82, 82' besitzt die bereits erwähnte Rotationssymmetrie in Bezug auf den Ursprungspunkt 52, 52', wie man anhand der Darstellungen in Fig. 6 und 7 leicht nachvollziehen kann.

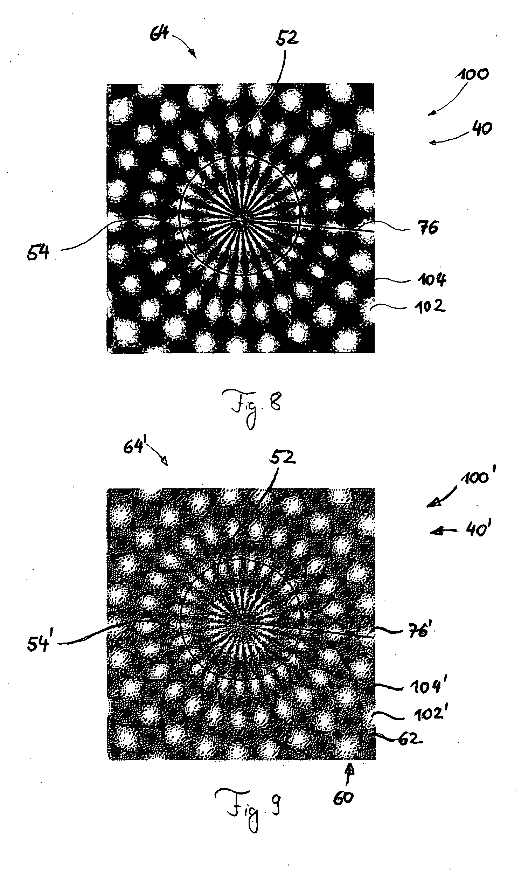

Fig. 8 zeigt ein viertes Muster 100, welches eine Kombination der Muster 40 aus Fig. 2 und 64 aus Fig. 4 darstellt. Das Muster 40 bildet hier ein erstes Teilmuster und das Muster 64 bildet ein zweites Teilmuster. Die beiden Teilmuster 40 und 64 sind einander überlagert, wobei beide Teilmuster 40 und 64 konzentrisch zum Ursprungspunkt 52 liegen. Somit ergibt sich, dass das Muster 100 zwei Intensitätsverläufe 54 und 76 aufweist, die senkrecht aufeinander stehen. Die Überlagerung kann prinzipiell durch Addition oder Multiplikation der einzelnen Teilmuster 40 und 64 miteinander erfolgen. Hier sind die Teilmuster additiv überlagert. Aufgrund der Überlagerung entsteht eine zu den einzelnen Teilmustern 40 und 64 unterschiedliche Anordnung von helleren Bereichen 102 und dunkleren Bereichen 104. Die Bereiche 102 und 104 erscheinen hier fleckenartig.

Fig. 9 zeigt eine binäre, schwarzweiße Variante des Musters 100 aus Fig. 8 als Muster 100'. Das Muster 100' besteht, wie auch die Muster 40' und 64', aus den Punktedichten 60, welche aus einzelnen Punkten 62 zusammengesetzt sind. Die Eigenschaften der schwarzweißen Variante ergeben sich analog zu den Eigenschaften des Musters 40' aus Fig. 3.

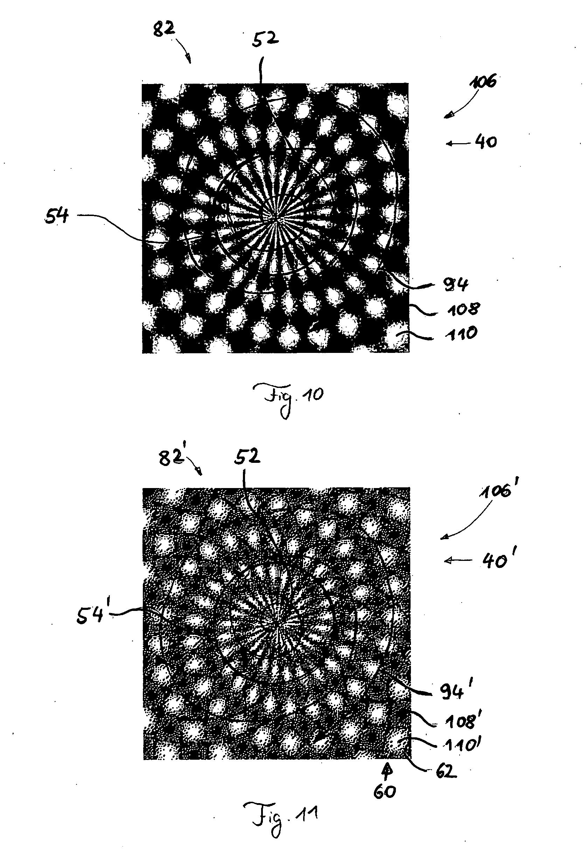

Fig. 10 zeigt ein weiteres Kombinationsmuster 106, das erste und zweite spiralartig gekrümmte Streifen aufweist. Man erkennt helle spiralartige Streifen 110, die gegen den Uhrzeigersinn gekrümmt sind, und dunkle spiralartige Streifen 108, die im Uhrzeigersinn gekrümmt sind, wobei durch die Überlagerung zusätzlich ein schachbrettartiges Gesamtmuster entsteht. Zudem ist hier der Krümmungsradius der Streifen bzw. deren Steigung unterschiedlich. Die hellen Spiralstreifen besitzen eine stärkere Krümmung als die dunklen Spiralstreifen.

Fig. 11 zeigt eine binäre, schwarzweiße Variante des Musters 106 aus Fig. 10 als Muster 106'. Das Muster 106' besteht aus den Punktedichten 60, welche die Punkte 62 aufweisen.

Die in den Fig. 8 bis 11 gezeigten Kombinationsmuster sind insgesamt rotationssymmetrisch in Bezug auf den Ursprungspunkt 52, 52'. Darüber hinaus ist jedes Teilmuster der Kombinationsmuster für sich genommen ebenfalls rotationssymmetrisch.

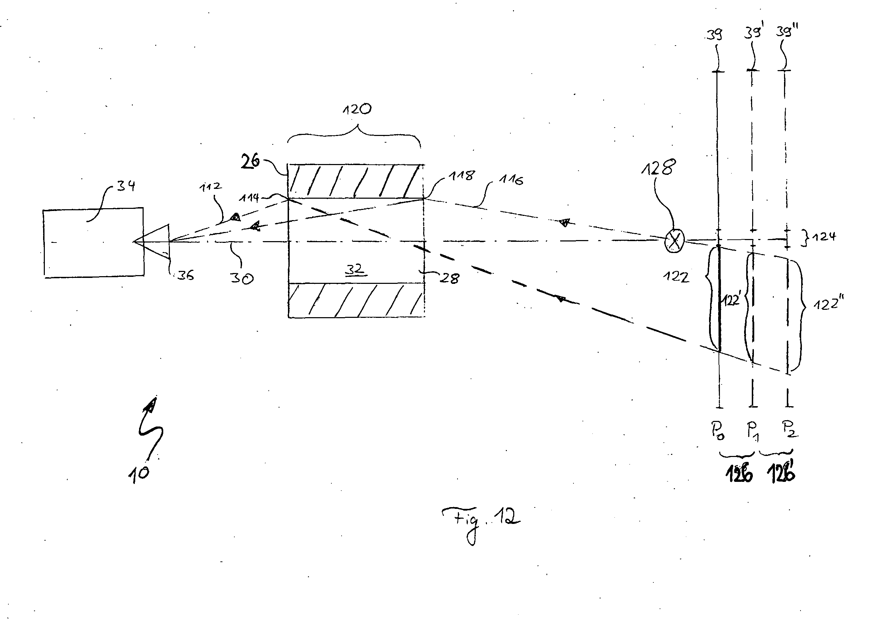

Die Fig. 12 zeigt die Vorrichtung der Fig. 1 in einer vereinfachten Darstellung. Ein erster optischer Pfad 112 verläuft ausgehend vom Mustergenerator 39 zu einer Kante 114 der Bohrung 28. An dieser Kante 114 wird der erste optische Pfad 112 reflektiert und zu der Optik 36 geführt. Ein zweiter optischer Pfad 116 verläuft ebenfalls ausgehend von dem Mustergenerator 39 zu der Optik 36. Im Gegensatz zum ersten optischen Pfad 112 beginnt der zweite optische Pfad 116 näher an der Längsachse 30. Der zweite optische Pfad 116 wird an einer Kante 118 reflektiert und ebenfalls in die Optik 36 geführt. Beide optische Pfade 112 und 116 schließen einen Reflexionsbereich 120 entlang des Innenmantels 32 ein. Diese bilden somit die Grenzen dessen aus, was ausgehend von der Bildaufnahmeeinheit 34 über den Reflexionsbereich 120 auf dem Mustergenerator 39 betrachtet werden kann. Dieser von der Bildaufnahmeeinheit 34 über den Reflexionsbereich 120 betrachtbare Teil des Mustergenerators 39 ist als Musterbereich 122 gekennzeichnet. Der Mustergenerator 39 besitzt vorzugsweise eines der in den Fig. 2 bis 11 dargestellten Muster. Dabei ist der Ursprungspunkt 52 des entsprechenden Musters auf der Längsachse 30 angeordnet. Zudem weist das Muster zum Gegenstand 26 hin, so dass Fig. 12 eine Seitenansicht des entsprechenden Musters zeigt. In einem musterfreien Bereich 124 um die Längsachse 30 ist das Muster hier kreisförmig ausgespart. Der Mustergenerator 39 ist in einer Position P₀ dargestellt. Durch Verschieben des Mustergenerators 39 um eine Schiebedistanz 126 gelangt der Mustergenerator 39' an die Position P₁. Ein weiteres Verschieben des Mustergenerators 39' um die Schiebedistanz 126' bringt den Mustergenerator 39" an die Position P₂. Aufgrund der unterschiedlichen Positionen P₀, P₁ und P₂ ergeben sich durch die gleichbleibenden optischen Pfade 112 und 116 verschiedene Musterbereiche 122, 122' und 122". Wie ersichtlich ist, verändert sich zum einen die Erstreckung des Musterbereichs 122 über die Schiebedistanzen 126 und 126' sowie die Position des Musterbereichs 122 auf dem Mustergenerator 39. Dies erfolgt hier derart, dass eine Vergrößerung der Schiebedistanz 126 dazu führt, dass der Musterbereich 122 von der Längsachse 30 weiter beabstandet ist. Aufgrund dieses Verhaltens ergibt sich im Schnittpunkt des zweiten optischen Pfades 116 mit der Längsachse 30 ein Wendepunkt 128. Wird der Mustergenerator 39 mit dem entsprechenden Muster zu dem Gegenstand 26 hin bewegt, und überquert der Mustergenerator 39 dabei den Wendepunkt 128, so kreuzt der Musterbereich 122 die Längsachse 30.

Alternativ oder ergänzend können die Muster auch durch eine Drehbewegung um die Längsachse 30 relativ zu der Oberfläche 32 verschoben werden. Des weiteren ist es in anderen Ausführungsbeispielen der Erfindung möglich, die Muster mit Hilfe von LEDs, OLEDs, LCDs oder anderen Anzeigetechnologien zu erzeugen und dann gewissermaßen "elektronisch" relativ zu der Oberfläche zu verschieben.

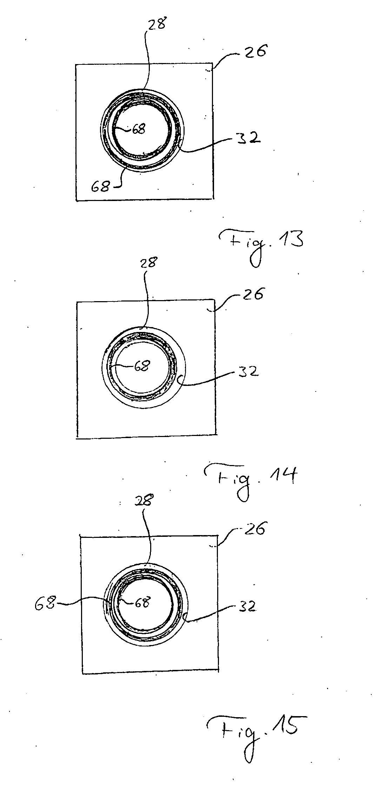

Fig. 13 zeigt den Gegenstand 26 der Fig. 12 in einer Vorderansicht. Diese Vorderansicht stellt jene Ansicht dar, welche die Bildaufnahmeeinheit 34 besitzt. Der gesamte Innenmantel 32 der Bohrung 28 ist als Ring erkennbar. Innerhalb des Rings bildet sich der Intensitätsverlauf 76 des hinter dem Gegenstand 26 befindlichen Musters 64 (in diesem Fall der Fig. 4) ab. Das Muster 64 befindet sich mit dem Mustergenerator 39 in Position P₀. Daraus ergibt sich, dass zwei dunklere Streifen 68 innerhalb der Bohrung 28 erfasst werden können. Aus Gründen der Übersichtlichkeit ist das Muster 64 in der Durchgangsöffnung der Bohrung in Fig. 13 nicht dargestellt.

Fig. 14 ergibt sich aus Fig. 13 durch Verschieben des Musters 64 auf die Position P₁. Durch die Veränderung des Musterbereichs 122 am Muster 64 ergibt sich, dass innerhalb des Innenmantels 32 jetzt nur ein einzelner dunklerer Streifen 68 erkennbar ist.

Fig. 15 ergibt sich aus Fig. 14 durch ein Verschieben des Mustergenerators 39' auf die Position P₂. Erkennbar ist, dass sich im hinteren Bereich der Bohrung 28 erneut ein dunklerer Streifen 68 abbildet. Gleichzeitig ist der dunklere Streifen 68 der Fig. 14 weiter nach vorne gerückt.

Die in den Fig. 13 bis 15 gezeigten Abbildungen am Innenmantel 32 sind vereinfacht und hier nur exemplarisch dargestellt. Bei praktischer Anwendung kann beispielsweise eine Vielzahl von dunklen Streifen 68 innerhalb des Innenmantels 32 abgebildet sein.

Das Verschieben des Musters 64 entlang der Längsachse 30 ermöglicht es, die entsprechenden Reflexionen des Intensitätsverlaufs an dem Innenmantel 32 wandern zu lassen. Ein in dem Muster vorhandener Intensitätsverlauf wird relativ zu der Mantelfläche 32 verschoben. Für jede Verschiebeposition wird ein Bild des Innenmantels mit dem Muster bzw. dem Intensitätsverlauf aufgenommen. Vorzugsweise wird jeder Oberflächenpunkt des Innenmantels zumindest viermal aufgenommen, wobei der Intensitätsverlauf in jedem Bild eine andere Relativposition besitzt. Die vier Bilder werden nach der so genannten 4-Bucket-Methode ausgewertet, wie dies im Detail in der eingangs genannten WO 2009/007130 A1 beschrieben ist, auf die hier insoweit vollumfänglich Bezug genommen ist und die dementsprechend als Teil der vorliegenden Offenbarung betrachtet wird.

Die Verschiebung des Mustergenerators 39 parallel zur Längsachse 30 ist vorteilhaft, wenn ein Ringmuster entsprechend Fig. 4 oder 5 verwendet wird. Bei einem Strahlenmuster entsprechend den Fig. 2 oder 3 oder bei Spiralmustern entsprechend den Fig. 6 oder 7 ist dagegen eine Drehung des Musters um die Längsachse von Vorteil, um die relative Verschiebung von Oberfläche und Muster zu erreichen. Bei Kombinationsmustern entsprechend den Fig. 8 bis 11 wird vorteilhaft eine kombinierte Dreh- und Schiebebewegung verwendet, die in einigen Ausführungsbeispielen zu einer Vorschubbewegung entlang einer Schraubenlinie führt.

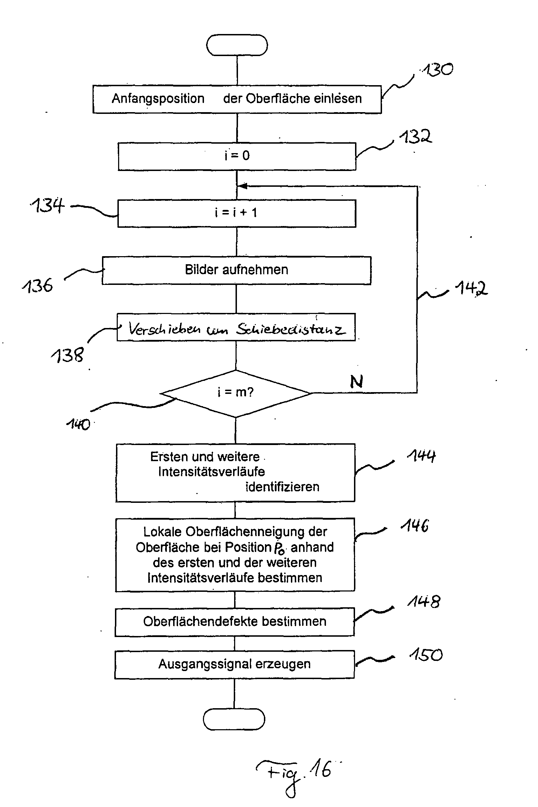

Fig. 16 zeigt anhand eines Flussdiagramms ein Ausführungsbeispiel des entsprechenden Verfahrens. Gemäß Schritt 130 wird zunächst die Anfangsposition X der zu inspizierenden Oberfläche bestimmt.

Gemäß Schritt 132 wird eine Zählvariable i = 0 gesetzt. Im Schritt 134 wird die Zählvariable i inkrementiert. Im Schritt 136 werden Bilder der zu inspizierenden Oberfläche mit der Bildaufnahmeeinheit 34 aufgenommen. Anschließend erfolgt gemäß Schritt 138 ein Verschieben des Mustergenerators 39 um die Schiebedistanz 126.

Gemäß Schritt 140 wird geprüft, ob die Schiebedistanz 126 vollständig durchlaufen worden ist. Ist dies nicht der Fall, verzweigt das Verfahren gemäß der Schleife 142 zum Schritt 134 zurück. Dort wird die Zielvariable i inkrementiert, und es werden im Schritt 90 weitere Bilder aufgenommen. Hierbei ist m die Anzahl der Bilder für eine Bildfolge.

Sobald die benötigte Anzahl an Bildern aufgenommen wurde, stehen für einen Oberflächenpunkt des Innenmantels 32 genügend Bilddaten zur Verfügung. Gemäß Schritt 144 werden zunächst die Intensitätsverläufe, die von den verschiedenen Streifen oder Strahlen gebildet werden, getrennt. Dies beinhaltet in bevorzugten Ausführungsbeispielen eine digitale Filterung der Bilddaten. Dies ist besonders erfolgreich, wenn unterschiedliche Frequenzen für verschiedene Teilmuster verwendet werden. Bei Verwendung unterschiedlicher Frequenzen können die Teilmuster durch eine Korrelation mit einem Vergleichssignal, das speziell die jeweils gesuchte Frequenz enthält, getrennt werden.

In einem weiteren Ausführungsbeispiel können verschiedene Teilmuster spektral unterschiedlich ausgeführt sein und dementsprechend anhand von Spektralfiltern getrennt werden.

Gemäß Schritt 146 wird anschließend die lokale Oberflächenneigung des betrachteten Oberflächenpunktes bestimmt. Dies kann anhand eines ausgewählten Intensitätsverlaufs geschehen oder anhand mehrerer Intensitätsverläufe, die separat ausgewertet werden.

Gemäß Schritt 148 werden dann anhand der lokalen Oberflächenneigung Oberflächendefekte bestimmt, etwa Kratzer, Beulen, Lunker etc.

Gemäß Schritt 150 wird ein Ausgangssignal erzeugt, das die in Schritt 148 bestimmten Oberflächendefekte und/oder die Qualität der inspizierten Oberfläche repräsentiert.

## Patentansprüche

1. Verfahren zum optischen Inspizieren einer Oberfläche (32) an einem Gegenstand (26), mit den Schritten:
- Bereitstellen eines ersten Musters (40, 64, 82) mit einer Vielzahl von helleren und dunkleren Bereichen (48, 72, 90; 50, 74, 92), die einen ersten Intensitätsverlauf (54, 76, 94) mit einer ersten Periode (56, 78, 96) bilden,
- Positionieren des Gegenstandes (26) mit der Oberfläche (32) relativ zu dem Muster (40, 64, 82) derart, dass der erste Intensitätsverlauf (54, 76, 94) auf die Oberfläche (32) fällt,
- Verschieben des ersten Intensitätsverlaufs (54, 76, 94) relativ zu der Oberfläche (32) um eine definierte Schiebedistanz (126), wobei die Oberfläche (32) entlang der Schiebedistanz (126) eine Vielzahl von unterschiedlichen Positionen relativ zu dem ersten Intensitätsverlauf (54, 76, 94) einnimmt,
- Aufnehmen einer Vielzahl von Bildern, die die Oberfläche (32) mit dem ersten Intensitätsverlauf (54, 76, 94) an den unterschiedlichen Positionen zeigen, und
- Bestimmen von Eigenschaften der Oberfläche (32) in Abhängigkeit von den Bildern,
**dadurch gekennzeichnet, dass** das erste Muster (40, 64, 82) eine Rotationssymmetrie relativ zu einem definierten Ursprungspunkt (52) aufweist.

2. Verfahren nach Anspruch 1, **dadurch gekennzeichnet, dass** ein zweites Muster (40, 64, 82) mit einer Vielzahl von helleren und dunkleren Bereichen (48, 72, 90; 50, 74, 92) bereitgestellt wird, die einen zweiten Intensitätsverlauf (54, 76, 94) mit einer zweiten Periode (56, 78, 96) bilden, wobei das erste und das zweite Muster zu einem Gesamtmuster (100, 106) kombiniert sind.

3. Verfahren nach Anspruch 2, **dadurch gekennzeichnet, dass** der erste und der zweite Intensitätsverlauf (54; 76, 94) senkrecht zueinander stehen.

4. Verfahren nach einem der Ansprüche 1 bis 3, **dadurch gekennzeichnet, dass** der Intensitätsverlauf (76) vom Ursprungspunkt (52) radial nach außen verläuft.

5. Verfahren nach einem der Ansprüche 1 bis 4, **dadurch gekennzeichnet, dass** der Intensitätsverlauf (54, 94) um den Ursprungspunkt (52) herum verläuft.

6. Verfahren nach einem der Ansprüche 1 bis 5, **dadurch gekennzeichnet, dass** das Muster (40) helle und dunkle Strahlen (42; 44) aufweist, die vom Ursprungspunkt (52) radial nach außen verlaufen.

7. Verfahren nach einem der Ansprüche 1 bis 6, **dadurch gekennzeichnet, dass** das Muster (64) helle und dunkle Ringe (66; 68) aufweist, die den Ursprungspunkt (52) umgeben.

8. Verfahren nach einem der Ansprüche 1 bis 7, **dadurch gekennzeichnet, dass** das Muster spiralartig gekrümmte Streifen aufweist, die vom Ursprungspunkt (52) radial nach außen verlaufen.

9. Verfahren nach einem der Ansprüche 1 bis 8, **dadurch gekennzeichnet, dass** der Intensitätsverlauf (54, 76, 94) einen weitgehend kontinuierlichen Übergang (46, 70, 88) zwischen einem helleren und einem dunkleren Bereich (48, 72, 90, 102, 108; 50, 74, 92, 104, 110) aufweist.

10. Verfahren nach einem der Ansprüche 1 bis 9, **dadurch gekennzeichnet, dass** das Muster (40', 64', 82', 100', 106') aus einer Vielzahl von hellen und dunklen Punkten (62) gebildet ist, wobei verschiedene Punktedichten (60) den Intensitätsverlauf (54', 76', 94') bilden.

11. Verfahren nach einem der Ansprüche 1 bis 10, **dadurch gekennzeichnet, dass** das Muster (40, 64, 82, 100, 106) den Ursprungspunkt (52) beinhaltet.

12. Verfahren nach einem der Ansprüche 1 bis 11, **dadurch gekennzeichnet, dass** ein Bereich (124) mit dem Ursprungspunkt (52) musterfrei ist.

13. Verfahren nach einem der Ansprüche 1 bis 12, **dadurch gekennzeichnet, dass** der Intensitätsverlauf mehrere Frequenzen besitzt.

14. Vorrichtung (10) zum optischen Inspizieren einer Oberfläche (32) an einem Gegenstand (26), mit:
- einem ersten Muster (40, 64, 82, 100, 106) mit einer Vielzahl von helleren und dunkleren Bereichen (48, 72, 90, 102, 108; 50, 74, 92, 104, 110), die einen ersten Intensitätsverlauf (54, 76, 94) mit einer ersten Periode (56, 78, 96) bilden,
- einer Aufnahme (12) zum Positionieren des Gegenstandes (26) mit der Oberfläche (32) relativ zu dem Muster (40, 64, 82, 100, 106) derart, dass der erste Intensitätsverlauf (54, 76, 94) auf die Oberfläche (32) fällt,
- einer Steuereinheit (14) zum Verschieben des ersten Intensitätsverlaufs (54, 76, 94) relativ zu der Oberfläche (32) um eine definierte Schiebedistanz (126), wobei die Oberfläche (32) entlang der Schiebedistanz (126) eine Vielzahl von unterschiedlichen Positionen relativ zu dem ersten Intensitätsverlauf (54, 76, 94) einnimmt,
- zumindest einer Bildaufnahmeeinheit (34) zum Aufnehmen einer Vielzahl von Bildern, die die Oberfläche (32) mit dem ersten Intensitätsverlauf (54, 76, 94) an den unterschiedlichen Positionen zeigen, und
- einer Auswerteeinheit (38) zum Bestimmen von Eigenschaften der Oberfläche (32) in Abhängigkeit von den Bildern,
**dadurch gekennzeichnet, dass** das erste Muster (40, 64, 82, 100, 106) eine Rotationssymmetrie relativ zu einem definierten Ursprungspunkt (52) aufweist.

15. Computerprogramm mit Programmcode, der auf einem Datenträger gespeichert ist und der dazu ausgebildet ist, ein Verfahren nach einem der Ansprüche 1 bis 14 auszuführen, wenn der Programmcode auf einem Computer ausgeführt wird.
